# EUROPEAN PATENT SPECIFICATION

(11) **EP 2 646 192 B1**
(45) Date of publication and mention of the grant of the patent: **27.04.2016**
(21) Application number: 11845822.3
(22) Date of filing: 28.11.2011
(51) Int. Cl.: B23K 9/12, B23K 9/133, B21C 47/20, B65H 59/04

(54) **WIRE FEEDING DEVICE OF A WELDING MACHINE AND METHOD FOR MOVING A WELDING WIRE**
DRAHTZUFÜHRUNGSVORRICHTUNG EINER SCHWEISSMASCHINE UND VERFAHREN ZUM BEWEGEN EINES SCHWEISSDRAHTES
DISPOSITIF D'ALIMENTATION DE FIL D'UNE MACHINE DE SOUDAGE ET PROCÉDÉ DE DÉPLACEMENT D'UN FIL DE SOUDAGE

(30) Priority: 01.12.2010 FI 20106267
(43) Date of publication of application: 09.10.2013
(73) Proprietor: Kemppi Oy, 15800 Lahti (FI)
(72) Inventor: ANTTONEN, Risto, FI-15100 Lahti (FI); KUNNAS, Esa, FI-15810 Lahti (FI); HÄMÄLÄINEN, Jani, FI-15500 Lahti (FI)
(74) Representative: Boco IP Oy Ab
(86) International application number: PCT/FI2011/051050
(87) International publication number: WO 2012/072876

(56) References cited:
- DE-U- 7 125 819
- GB-A- 394 756
- US-A- 3 351 302
- US-A- 4 465 246
- US-A- 4 508 291
- US-A- 5 465 917
- US-A- 5 948 296

## Description

### Background of the invention

The invention relates to a wire feeding device of a welding machine according to the preamble of claim 1, said wire feeding device comprising a frame, a hub system arranged in the frame for winding a wire coil, and a wire feeding mechanism for pulling the welding wire from the wire coil such that the wire coil rolls in the unwinding direction and for feeding the welding wire through the wire feeding mechanism to the welding torch.

The invention also relates to a method for moving a welding wire in a wire feeding device according to the preamble of claim 9, said wire feeding device comprising a frame, a hub system arranged in the frame for winding a wire coil, and a wire feeding mechanism for pulling the welding wire from the wire coil such that the wire coil rolls in the unwinding direction and for feeding the welding wire through the wire feeding mechanism to the welding torch, and said hub system comprising a shaft, said method comprising a wire feeding starting stage, wherein the wire feeding mechanism pulls the welding wire into motion, and a wire feeding stopping stage, wherein the wire feeding mechanism stops pulling the welding wire.

Wire feeding is an essential part of MIG/MAG-welding. In a wire feeding device, the main parts are the wire feeding mechanism and the hub system, into the hub of which the wire coil is attached. The wire feeding mechanism serves to feed the welding wire from the wire coil to the welding torch and through the welding torch constantly during the welding process. In order for MIG/MAG-welding to succeed, the wire feeding must be trouble-free and occur at a regulated speed. The welding wire coming from the wire feeding device is in the wire feeding device as a wire coil around a hub system, from which, when welding starts, the wire feeding mechanism starts to wind the wire towards the welding torch. The wire feeding mechanism has typically one or two pairs of feeding wheels, which squeeze around the welding wire and, as they turn, create a pulling force on the welding wire. The rotation speed of the feeding wheel pair is guided by the motor of the wire feeding mechanism. When welding ends, the wire feeding mechanism stops pulling the welding wire towards the welding torch and the welding wire stops in place between the pair of feeding wheels. At the same time, there typically remains a bit of slack welding wire between the wire coil and the wire feeding mechanism, because the heavy wire coil still rolls slightly under the influence of the moment of inertia. When a new welding process starts, the wire feeding mechanism pulls the wire and the slack wire proceeds first towards the welding torch until the wire coil actually starts to rotate. In this case, a discontinuity point is created to the motor of the wire feeding mechanism, when the heavy wire coil must suddenly be set into motion after the easily pulled slack wire.

JP 2003053541 describes a wire feeding device in a welding machine, in which the wire coil is arranged in a rotating cylinder. The rotating cylinder is arranged on a fixed shaft, to which shaft is attached a bearing and a spring and a screw going through these. By tightening the screw, a pushing force is created, which functions as a brake to the rotating shaft, wherein, when the wire feeding mechanism stops pulling the wire, the wire coil does not continue rotating on its own, rather the brake stops its rotation.

US 6,064,036 also describes a wire feeding device in a welding machine, in which, by a coil brake, is prevented the unwinding of a wire coil, as well as regulation of the position of the welding wire so that the welding wire remains in its original position on the coil. As the coil brake functions the arm of the brake, which leans against the wire coil by means of a spring.

US 4,508,291 describes a wire feeding device according to the preamble of claim 1, comprising an arm with a guiding pulley. When the wire feeding mechanism stops pulling the welding wire, the arm is returned to the starting position.

The problem in the publications described above is the uncontrollability of the start and the end of the welding process, and the weakening in welding quality at the start of welding resulting from this. Although the movement of the wire coil is resisted by an uniform braking force, which comes typically from the increased friction between the shaft and the cylinder, i.e. the coil brake, the wire coil is, however, still able, after the end of the welding process, to rotate slightly, releasing slack wire between the wire coil and the wire feeding mechanism. The next welding process starts with slack wire and the speed of wire feeding manages to grow almost to its final value even though the wire coil itself has not yet even been set into motion. The delayed setting into motion of the wire coil is seen as a momentary, undesirable change in wire feeding speed and welding flow. The formed discontinuity point in the need for pulling force also typically causes pitting of the welding wire, i.e. the feeding wheel pair undesirably moulds the shape of the surface of the welding wire. The moulded points in the welding wire proceed to the narrow nozzle portion of the welding torch and there create problems in the quality of welding. In particular, pitting is typical of soft aluminium wire.

The wire coil weighs typically up to 20 kg, wherein, as the welding process starts, a great deal of force is required for setting the wire coil into motion and thus feeding the wire to the welding torch. The wire feeding speed is normally approximately 10-18 m/s and can rise to up to 25 m/s. This creates, specifically at the beginning of wire feeding, demands in order that the welding wire be set into motion without jerks or pittings. Also, variations in the welding speed create their own demands on wire feeding, which should remain uniform and controlled. In some cases, during the welding process, can also be used a double pulse method, in which electrical and mechanical pulses are used alternately, wherein the wire feeding speed must be changed in relation to time and this increases further the challenges of uniform feeding of the wire.

### Brief description of the invention

The object of the invention is to solve above said problems. The object of the invention is to provide a controlled start and end of a welding process such that the wire between the wire feeding mechanism and the wire coil remains constantly tight, nor does there remain any slack wire whatsoever and also to provide an uniform welding process.

The object of the invention is achieved by a wire feeding device according to independent claim 1.

The invention is also directed to a method according to independent claim 9.

The preferred embodiments of the invention are presented in the dependent claims.

Hereafter, reference is made generally to a wire feeding device, a wire feeding mechanism and a hub system, into the hub of which the wire coil is arranged. These terms comprise wire feeding devices arranged to a power supply, in which the above said are arranged in connection with the power supply, separate wire feeding devices, wire coils arranged in connection with the welding torch, in which the wire feeding mechanism typically is in connection with the torch, and also combinations of these above said.

The invention comprises a wire feeding device of a welding machine, said wire feeding device comprising a frame, a hub system arranged in the frame for winding the wire coil, and a wire feeding mechanism for pulling the welding wire from the wire coil such that the wire coil rotates in the unwinding direction and for feeding the welding wire through the wire feeding mechanism to the welding torch, said hub system comprising means for storing energy, said means for storing energy being adapted to store energy as the wire feeding mechanism starts to pull the welding wire from the wire coil in the unwinding direction such that, when the wire feeding mechanism stops pulling the welding wire, the stored energy is adapted to be released, pulling the wire coil in the winding direction, which is the opposite direction in relation to the unwinding direction.

The invention also comprises a method for moving a welding wire in a wire feeding device, said wire feeding device comprising a frame, a hub system arranged in the frame for winding the wire coil and a wire feeding mechanism for pulling the welding wire from the wire coil such that the wire coil rotates in the unwinding direction and for feeding the welding wire through the wire feeding mechanism to the welding torch, and said hub system comprising a shaft, and said method comprising a wire feeding starting stage, wherein the wire feeding mechanism pulls the welding wire into motion, and a wire feeding stopping stage, wherein the wire feeding mechanism stops pulling the welding wire, and that said hub system comprising means for storing energy, and, in which method, energy is stored as the wire feeding mechanism starts to pull the welding wire from the wire coil in the unwinding direction such that when the wire feeding mechanism stops pulling the welding wire, the stored energy is released and the wire coil is pulled in the winding direction, which is the opposite direction in relation to the unwinding direction.

In a solution according to the invention, means for storing energy are arranged between the frame of the wire feeding device or a part immovably arranged in relation to it and a part movable in relation to the frame of the wire feeding device, and which are arranged to store and release the energy, which is created, when the part that is movable in relation to the frame of the wire feeding device moves in relation to the frame of the wire feeding device or a part that is immovable in relation to it.

In one solution according to the invention, the hub system comprises a shaft, which is rotationally arranged in the frame of a wire feeding device, and that means for storing energy are arranged between the shaft and the frame of the wire feeding device.

According to one embodiment, the wire feeding device thus comprises a hub system, which, in turn, comprises a shaft and a hub that goes onto the shaft, i.e. a coil hub, onto which the wire coil is set. The shaft in the wire feeding device is able to rotate on its bearings in connection with the frame of the wire feeding device, i.e. the shaft is movably arranged in relation to the frame of the wire feeding device. The shaft is preferably attached to the frame of the wire feeding device with a spring. The spring receives the energy related to the start of the welding process and stores it until the force of the coil brake is overcome and the coil hub starts to rotate in relation to the shaft. The force of the coil brake is the frictional force resulting from the compressive force between the hub and the shaft. Between the surfaces of the hub and the shaft, there are typically friction pads, i.e. brake pads. The coil brake can be adjusted by compressing the hub more closely against the shaft, wherein friction increases and the brake becomes tighter. At the end of the welding process, the spring releases the force, pulling the wire coil opposite to the normal rotation direction, and removes the slack between the wire coil and the wire feeding mechanism. Instead of the spring can be used an electric motor or a counterweight, which enables movement of the shaft in relation to the frame and, thus, the rotation of the coil in the opposite direction.

In another solution according to the invention, the hub system comprises a shaft, and means for storing energy are arranged between the shaft immovably arranged in relation to the frame of the wire feeding device and a brake mechanism arranged in connection with the shaft and movable in relation to the shaft.

According to one embodiment, the wire feeding device thus comprises a hub system, which, in turn, comprises a shaft and a hub that goes onto the shaft. Between the shaft and the hub is preferably arranged means for braking the hub, said means for braking the hub preferably comprising a spring, a brake mechanism and adjustment means. The spring, such as a torsion spring, is preferably arranged inside the shaft for storing and releasing energy. The brake mechanism, preferably comprising a brake shoe and a pendulum, is arranged functionally in connection with the spring to brake the hub such that the brake mechanism is able to pivot in relation to the shaft and to move towards the hub to adjust the movement of the hub. By adjustment means, such as an adjustment sleeve, the braking power of the brake mechanism can be adjusted. The brake mechanism is preferably arranged in the shaft such that is able to pivot in relation to the shaft approximately 30-50°, preferably 35-45°. The brake mechanism and the spring work together such that, as the brake mechanism pivots in relation to the shaft, the torsion spring tenses and stores energy. The brake mechanism comprises a stopper, which blocks the brake mechanism, so it cannot pivot further after achieving a given angle. In this case, the hub starts to rotate in relation to the brake mechanism and the brake mechanism remains in place in relation to the shaft. The force towards the hub created by the brake mechanism is exceeded, when the wire feeding mechanism pulls the welding wire, wherein the hub as well as the wire coil in the hub rotate in relation to the shaft and the brake mechanism. It is then only the force of the wire feeding mechanism that pulls the welding wire from the wire coil in the hub and prevents the release of the spring and the brake mechanism during welding. When the wire feeding mechanism stops pulling, the energy stored in the spring releases and returns the brake mechanism to the resting position, wherein the hub moves in the opposite direction in relation to the normal direction of travel during welding, tightening the welding wire between the wire coil and the wire feeding mechanism. In the resting position, the wire feeding mechanism compresses the welding wire between the feeding wheels, therefore the welding wire cannot move in the opposite direction in relation to the direction of travel between the wire feeding mechanism and the welding torch, and this compressive force enables tightening of the welding wire between the wire feeding mechanism and the hub system, into which hub system the welding wire coil is thus arranged. I.e. during welding in the first direction, the force of the spring pulls up to the stopper of the brake mechanism and, in the other direction opposite to the first direction, pulls the pulling force of the wire feeding mechanism. During welding, the pulling force caused by the wire feeding mechanism exceeds the force created by the brake mechanism, wherein the brake slips and the hub rotates in relation to the shaft and the brake mechanism. Upon welding, the force of the spring exceeds the pulling force created by the wire feeding mechanism, wherein the hub and the wire coil in the hub rotate in the opposite direction in relation to the normal direction of travel during welding, tightening the wire between the wire feeding mechanism and the wire coil. I.e. in the resting position influences the compressive force of the wire feeding mechanism. According to this embodiment, the means for storing energy thus comprise a spring, but instead of the spring can also be some other means suitable for the purpose, which can store and release energy. A brake mechanism according to the embodiment is arranged to, at least partially, pivot around the shaft and it comprises a pendulum and a brake shoe, said brake shoe being arranged to move in relation to the pendulum.

Before the start of the welding process, the wire is first in the resting position, wherein the wire does not move. The wire coil is attached to the hub, which is arranged on the shaft. The hub has a block or other corresponding stopper for keeping the wire coil in the hub without the wire coil being able to separate from the hub in the middle of the welding process. The hub is arranged on the shaft such that it can rotate around the shaft. The brake mechanism, preferably comprising a pendulum and a brake shoe, is attached to the shaft. The brake mechanism is pretensioned so that the brake shoe remains tightly secured on the inner surface of the hub so that the hub does not separate from the shaft. The brake shoe is preferably arranged to move in relation to the pendulum. Brake mechanism and, specifically, the brake shoe is arranged to burrow its outer circumference against the inner surface of the hub. The brake shoe is connected to the pendulum preferably through one or more attachment points, for example, with one or more pegs or in a corresponding manner such that the brake shoe can move in relation to the pendulum around the attachment point such that the outer circumference of the brake mechanism increases. The attachment point functioning as the joint is preferably fixed and another attachment point can be of the type, where the peg connecting the brake shoe and the pendulum can move in the hole receiving the peg, which is, for example, oval in shape. In this case, for example, the peg going through the brake shoe arranged in connection with the pendulum and the pendulum settles in the hole corresponding in size to the peg in the pendulum and in the oval hole in the pendulum, i.e. that is larger than the peg, wherein the brake shoe is able to move in relation to the pendulum a distance according to the oval hole. The brake shoe is a wearing part, wherein it is important that it burrows from exactly the correct point against the inner surface of the hub and it can be controlled by means of the peg and the hole in the pendulum that is larger than the peg.

As the outer circumference of the brake mechanism increases, the force against the inner surface of the hub rises, and the hub remains attached in the brake mechanism or slips in a controlled manner during welding. The spring, preferably a torsion spring, is located inside the shaft such that the brake mechanism is in connection with the head of the spring, for example, via the peg or other corresponding connecting piece. In the resting state, the spring is pretensioned such that it keeps the outer circumference of the brake at a desired size, pushing the brake shoe towards the hub, wherein the brake mechanism is tight against the inner surface of the hub. The brake mechanism is attached to the shaft such that it can pivot around the shaft in the opposite direction in relation to the force of the spring. The brake mechanism in its entirety pivots, tensioning the spring. Pivoting is limited such that the brake mechanism pivots preferably 35-45°, after which pivoting of the brake mechanism is prevented, for example, with a mechanical peg. Pivoting of the brake mechanism in the opposite direction is correspondingly prevented so that the spring remains pretensioned.

When welding starts, the wire feeding mechanism begins pulling the welding wire from the wire coil. In this case, the hub and the brake mechanism start to rotate in relation to the shaft due to the force of the welding wire being pulled. The brake mechanism pivots to its maximum, i.e. preferably 45° in relation to the shaft and, at the same time, it pivots the spring into the tensioned state. The mechanical peg or other corresponding block prevents the brake mechanism from moving preferably over 45°, wherein the brake mechanism remains in place in relation to the shaft and the spring is tensioned. The force of the wire feeding mechanism pulling the welding wire exceeds the frictional force, which is caused by the contact between the outer surface of the brake mechanism and the inner surface of the hub, wherein the hub continues rotating in relation to the shaft and the brake mechanism.

When welding ends and the wire feeding mechanism no longer pulls the welding wire, the hub and the wire coil in the hub rotate slightly under the influence of the moment of inertia. In this case, the welding wire is no longer pulled by the force coming from the wire feeding mechanism and the energy bound in the spring can be released, under the influence of which the spring rotates the brake mechanism back into the resting position, at the same time rotating the hub and the wire coil in the hub in the opposite direction as when welding and pulling the wire that remained slack away from the between the wire feeding mechanism and the wire coil. Thus, the start of the next welding is controlled because there is no slack in the wire between the wire feeding mechanism and the wire coil. In this case, from the very beginning, the welding wire begins to travel at an uniform resistance, nor is a discontinuity point created, which normally would be created, when the slack welding wire is pulled and the heavy wire coil must be set into motion. Removing or reducing the discontinuity point also assists guiding of the motor creating the pulling force of the wire feeding device, because the motor can be adjusted gradually under the influence of the spring. Without a solution according to the invention, the motor would have to react to a suddenly increased need for force after the slack wire due to the moment of inertia of the heavy coil.

In one embodiment, in the spring are arranged adjustment means for tightening and/or loosening the spring. If the welder desires to change the braking power as lesser so that the force pulling the wire could be smaller, he can adjust this as desired. The adjustment can occur, for example, in the following manner. Inside the spring, there is preferably a brake tightening sleeve or corresponding adjuster, which can be, for example, of plastic or elastic. For example, with a screw or peg, the tightening sleeve can be compressed closer or further in relation to the inner surface of spring at the different lengths of the spring, preventing or allowing reduction of the inner circumference of the spring in the different points of the spring, i.e. preventing or allowing tightening of the spring. The peg can be in a position, in which the spring can freely contract along its entire length or, if the peg is moved with the screw towards the brake mechanism, the tightening sleeve is able to compress against the spring along its entire length, in which the peg is located and this part of the spring remains "dead" i.e. it cannot tighten. Thus, by moving the screw, the welder can adjust the length of the tightening spring. The length of the screw influences directly the force of the outer circumference of the brake mechanism against the inner surface of the hub.

By a preferred embodiment of the solution according to the invention is achieved the advantage that wire feeding starts smoothly and no pitting or jerking occurs when setting into motion. Upon wire feeding, retracting of the wire occurs, wherein there remains no slack wire between the wire feeding mechanism and the wire coil.

### List of figures

In the following, some preferred embodiments of the invention are presented in more detail with reference to the accompanying figures, in which
Fig. 1 shows a wire feeding device, and
Fig. 2 shows a hub system of a wire feeding device according to the invention.

### Detailed description of the invention

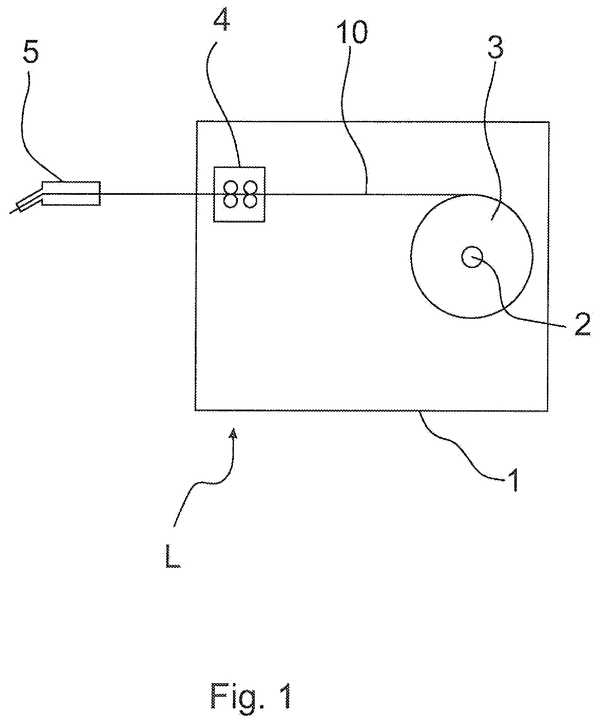

Fig. 1 shows a wire feeding device L, which, in this example, is its own general device. The wire feeding device L can be located also in connection with the power supply, in connection with the welding torch or as a combinational device, nor is the wire feeding device L presented in the claims limited to only one of these alternatives, rather it can vary within the scope of the claims. The wire feeding device L comprises a frame 1 and a hub system 2 arranged in the frame, in connection with which is arranged a wire coil 3. The wire coil 3 comprises welding wire 10, which is unwind from a wire coil 3 by a wire feeding mechanism 4 and via it to a welding torch 5 and via the welding torch 5 as a welding seam created. As the wire coil 3 is unwind, i.e. when feeding towards the wire feeding mechanism 4, in other words as the wire feeding mechanism 4 pulls the welding wire 10, the wire coil 3 rotates in the unwinding direction. The opposite direction to the unwinding direction is the winding direction, wherein the welding wire 10 is wound, i.e. rolled onto the wire coil 3.

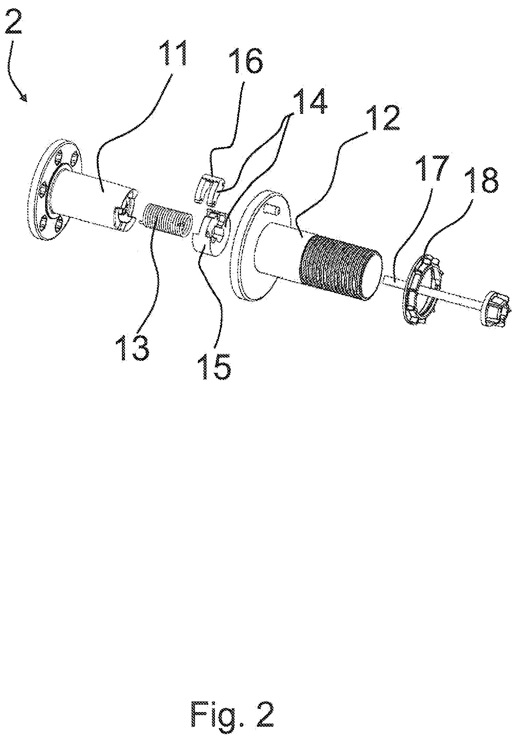

Fig. 2 shows one embodiment according to the invention and, specifically, one embodiment of the hub system 2 in Fig. 1 in more detail. The shaft 11 seen in Fig. 2 is arranged to the wire feeding device L seen in Fig. 1, for example, with screws. In this embodiment, the shaft 11 is then immovably arranged in relation to the frame 1 of the wire feeding device L. The shaft 11 supports the hub 12, in which the wire coil 3 (not shown in the figure) is arranged such that the wire coil 3 can rotate with the hub 12 around the shaft 11. Inside the shaft 11 is preferably arranged a torsion spring 13, which serves to store energy, which is formed by the rotation of the brake mechanism 14 in relation to the shaft 11. The brake mechanism 14 is arranged in connection with the shaft 11 such that it is also in connection with the torsion spring 13. The brake mechanism 14 comprises a pendulum 15 and a brake shoe 16, said brake shoe 16 being able to move together with the pendulum 15 in relation to the shaft 11. The wire coil 3 can be locked to the hub 12 with the locking mechanism 18 such that it cannot slip away from the hub 12. The torsion spring 13 inside the shaft 11 can be tightened or loosened by adjustment means 17.

According to the invention, means for storing energy, such as a spring 13, are arranged between the frame 1 of the wire feeding device L or a part immovably arranged in relation to the frame 1 and a part movably arranged in relation to the frame 1 of the wire feeding device L, and, in which method, energy is stored and released, which is created, when the part that is movable in relation to the frame 1 moves in relation to the frame 1 or the part that is immovable in relation to it. In the method, in the wire feeding starting stage, due to the setting into motion of the welding wire 10, the part that is movable in relation to the frame 1 of the wire feeding device L moves in the wire feeding direction, i.e. the unwinding direction, and the means for storing energy store energy and, after execution of the wire feeding stopping stage, the stored energy is released, moving the part that is movable in relation to the frame 1 of the wire feeding device L in the opposite direction in relation to the wire feeding direction, i.e. the unwinding direction, tightening the welding wire 10 between the wire coil 3 and the wire feeding mechanism 4. According to one embodiment, in the wire feeding device L used in the method, the hub system 2 comprises a shaft 11, which is rotatably arranged to the frame 1 of the wire feeding device L, and that means for storing energy are arranged between the shaft 11 and the frame 1 of the wire feeding device L. According to another embodiment, in the wire feeding device L used in the method, the hub system 2 comprises a shaft 11, and that means for storing energy are arranged between the shaft immovably arranged in relation to the frame 1 of the wire feeding device L and a brake mechanism 14 arranged in connection with the shaft 11 and movable in relation to the shaft 11.

In the wire feeding device can be used solutions suitable for storing and releasing energy, such as a counterweight. According to one embodiment, such can be the use of a spring in a wire feeding device comprising a frame for storing and releasing energy, which spring is arranged between the frame of the wire feeding device or a part immovably arranged in relation to it and a part movably arranged in relation to the frame of the wire feeding device to store and release the energy, which is created, when the part that is movable in relation to the frame of the wire feeding device moves in relation to the frame of the wire feeding device or the part that is immovable in relation to it.

It is obvious to the person skilled in the art that as technology develops, the fundamental idea of the invention can be implemented in many different manners. The invention and its embodiments are thus not limited to only the examples presented above, rather many variations are possible within the claims.

## Claims

1. A wire feeding device (L) of a welding machine, said wire feeding device (L) comprising
- a frame (1),
- a hub system (2) arranged to the frame (1) for winding a wire coil (3), and
- a wire feeding mechanism (4) for pulling the welding wire (10) from a wire coil (3) such that the wire coil (3) rotates in the unwinding direction and for feeding the welding wire (10) through the wire feeding mechanism (4) to a welding torch (5),
**characterized in that** the hub system (2) comprises means for storing energy, said means for storing energy being adapted to store energy as the wire feeding mechanism (4) starts pulling the welding wire (10) from the wire coil (3) in the unwinding direction such that, when the wire feeding mechanism (4) stops pulling the welding wire (10), the stored energy is adapted to be released, pulling the wire coil (3) in the winding direction, which is the opposite direction in relation to the unwinding direction.

2. A wire feeding device (L) according to claim 1, **characterized in that** means for storing energy are arranged between the frame (1) of the wire feeding device (L) or a part immovably arranged in relation to it and a part movably arranged in relation to the frame (1) of the wire feeding device (L), and which are arranged to store and release the energy, which is created, when the part that is movable in relation to the frame (1) of the wire feeding device (L) moves in relation to the frame (1) of the wire feeding device (L) or the part that is immovable in relation to it.

3. A wire feeding device (L) according to claim 2, **characterized in that** the hub system (2) comprises a shaft (11), which is rotatably arranged to the frame (1) of the wire feeding device (L), and that means for storing energy are arranged between the shaft (11) and the frame (1) of the wire feeding device (L).

4. A wire feeding device (L) according to claim 2, **characterized in that** the hub system (2) comprises a shaft (11), and that means for storing energy are arranged between the shaft (11) immovably arranged in relation to the frame (1) of the wire feeding device (L) and a brake mechanism (14) arranged in connection with the shaft (11) and movable in relation to the shaft (11).

5. A wire feeding device (L) according to claim 4, **characterized in that** the brake mechanism (14) is arranged to, at least partially, pivot around the shaft (11).

6. A wire feeding device (L) according to claim 4 or 5, **characterized in that** the brake mechanism (14) comprises a pendulum (15) and a brake shoe (16), said brake shoe (16) being arranged to move in relation to the pendulum (15).

7. A wire feeding device (L) according to any one of claims 1-6, **characterized in that** the means for storing energy comprise a spring (13).

8. A wire feeding device (L) according to claim 7, **characterized in that** adjustment means (17) are arranged in the spring (13) for tightening and/or loosening the spring (13).

9. A method for moving a welding wire (10) in a wire feeding device (L),
said wire feeding device (L) comprising a frame (1), a hub system (2) arranged to the frame (1) for winding a wire coil (3), and a wire feeding mechanism (4) for pulling the welding wire (10) from the wire coil (3) such that the wire coil (3) rotates in the unwinding direction and for feeding the welding wire (10) through the wire feeding mechanism (4) to a welding torch (5), and said hub system (2) comprising a shaft (11),
said method comprising a wire feeding starting stage, wherein the wire feeding mechanism (4) pulls the welding wire (10) into motion, and a wire feeding stopping stage, wherein the wire feeding mechanism (4) stops pulling the welding wire (10),
**characterized in that** the hub system (2) comprises means for storing energy, and, in which method, energy is stored as the wire feeding mechanism (4) starts to pull the welding wire (10) from the wire coil (3) in the unwinding direction such that, when the wire feeding mechanism (4) stops pulling the welding wire (10), the stored energy is released and the wire coil (3) is pulled in the winding direction, which is the opposite direction in relation to the unwinding direction.

10. A method according to claim 9, **characterized in that** means for storing energy are arranged between the frame (1) of the wire feeding device (L) or a part immovably arranged in relation to the frame (1) and a part movably arranged in relation to the frame (1) of the wire feeding device (L), and
in which method, energy is stored and released, which is created, when the part movably arranged in relation to the frame (1) moves in relation to the frame (1) or the part immovably arranged in relation to it.

11. A method according to claim 10, **characterized in that**, in the method, in the starting stage of wire feeding, due to the welding wire (10) setting into motion, the part movable in relation to the frame (1) of the wire feeding device (L) frame (1) moves in the unwinding direction and the means for storing energy store energy, and
after execution of the wire feeding stopping stage, the stored energy is released, moving the part movable in relation to the frame (1) of the wire feeding device (L) in the opposite direction in relation to the unwinding direction, tightening the welding wire (10) between the wire coil (3) and the wire feeding mechanism (4).

12. A method according to claim 10 or 11, **characterized in that**, in the wire feeding device (L) used in the method, the hub system (2) comprises a shaft (11), which is rotatably arranged to the frame (1) of wire feeding device (L), and that means for storing energy are arranged between the shaft (11) and the frame (1) of the wire feeding device (L).

13. A method according to claim 10 or 11, **characterized in that**, in the wire feeding device (L) used in the method, the hub system (2) comprises a shaft (11), and that means for storing energy are arranged between the shaft (11) immovably arranged in relation to the frame (1) of the wire feeding device (L) and a brake mechanism (14) arranged in connection with the shaft (11) and movable in relation to the shaft (11).

## Patentansprüche

1. Drahtvorschubvorrichtung (L) einer Schweißmaschine, wobei die Drahtvorschubvorrichtung (L) umfasst:
- einen Rahmen (1),
- ein am Rahmen (1) angeordnetes Wickelsystem (2) zum Wickeln einer Drahtspule (3) und
- einen Drahtvorschubmechanismus (4) zum Abziehen des Schweißdrahtes (10) von einer Drahtspule (3) dergestalt, dass die Drahtspule (3) sich in Abwickelrichtung dreht, und zum Zustellen des Schweißdrahtes (10) durch den Drahtvorschubmechanismus (4) zu einem Schweißbrenner (5),
**dadurch gekennzeichnet, dass** das Wickelsystem (2) Mittel zur Energiespeicherung umfasst, wobei diese Mittel zur Energiespeicherung so ausgelegt sind, dass sie Energie speichern, wenn der Drahtvorschubmechanismus (4) in Abwickelrichtung mit dem Abziehen des Schweißdrahtes (10) von der Drahtspule (3) beginnt, so dass, wenn der Drahtvorschubmechanismus (4) das Abziehen des Schweißdrahtes (10) beendet, die gespeicherte Energie freigegeben wird und die Drahtspule (3) in die Wickelrichtung zieht, die die Richtung entgegengesetzt zur Abwickelrichtung ist.

2. Drahtvorschubvorrichtung (L) nach Anspruch 1, **dadurch gekennzeichnet, dass** die Mittel zur Energiespeicherung zwischen dem Rahmen (1) der Drahtvorschubvorrichtung (L) oder einem relativ zu diesem unbeweglich angeordneten Teil und einem beweglich zum Rahmen (1) der Drahtvorschubvorrichtung (L) angeordneten Teil angeordnet sind und dass sie so angeordnet sind, dass sie Energie speichern und freigeben, was bewirkt wird, wenn das zum Rahmen (1) der Drahtvorschubvorrichtung (L) bewegliche Teil sich relativ zum Rahmen (1) der Drahtvorschubvorrichtung (L) oder zum dazu unbeweglichen Teil bewegt.

3. Drahtvorschubvorrichtung (L) nach Anspruch 2, **dadurch gekennzeichnet, dass** das Wickelsystem (2) eine Welle (11) umfasst, die am Rahmen (1) der Drahtvorschubvorrichtung (L) drehbar angeordnet ist, und dass Mittel zur Energiespeicherung zwischen der Welle (11) und dem Rahmen (1) der Drahtvorschubvorrichtung (L) angeordnet sind.

4. Drahtvorschubvorrichtung (L) nach Anspruch 2, **dadurch gekennzeichnet, dass** das Wickelsystem (2) eine Welle (11) umfasst und dass Mittel zur Energiespeicherung zwischen der Welle (11), die unbeweglich zum Rahmen (1) der Drahtvorschubvorrichtung (L) angeordnet ist, und einem Bremsmechanismus (14), der in Verbindung mit der Welle (11) angeordnet und relativ zur Welle (11) beweglich ist, angeordnet sind.

5. Drahtvorschubvorrichtung (L) nach Anspruch 4, **dadurch gekennzeichnet, dass** der Bremsmechanismus (14) so angeordnet ist, dass er sich, zumindest teilweise, um die Welle (11) schwenkt.

6. Drahtvorschubvorrichtung (L) nach Anspruch 4 oder 5, **dadurch gekennzeichnet, dass** der Bremsmechanismus (14) ein Pendel (15) und einen Bremsschuh (16) umfasst, wobei der Bremsschuh (16) so angeordnet ist, dass er sich relativ zum Pendel (15) bewegt.

7. Drahtvorschubvorrichtung (L) nach einem der Ansprüche 1 bis 6, **dadurch gekennzeichnet, dass** die Mittel zur Energiespeicherung eine Feder (13) umfassen.

8. Drahtvorschubvorrichtung (L) nach Anspruch 7, **dadurch gekennzeichnet, dass** in der Feder (13) Stellmittel (17) für das Spannen und/oder Lockern der Feder (13) angeordnet sind.

9. Verfahren zum Bewegen eines Schweißdrahtes (10) in einer Drahtvorschubvorrichtung (L),
wobei die Drahtvorschubvorrichtung (L) umfasst: einen Rahmen (1), ein am Rahmen (1) angeordnetes Wickelsystem (2) zum Wickeln einer Drahtspule (3) und einen Drahtvorschubmechanismus (4) zum Abziehen des Schweißdrahtes (10) von der Drahtspule (3) dergestalt, dass die Drahtspule (3) sich in Abwickelrichtung dreht, und zum Vorschieben des Schweißdrahtes (10) durch den Drahtvorschubmechanismus (4) zu einem Schweißbrenner (5), und wobei das Wickelsystem (2) eine Welle (11) umfasst,
wobei das Verfahren umfasst: eine Drahtvorschub-Anlaufstufe, bei der der Drahtvorschubmechanismus (4) den Schweißdraht (10) in Bewegung zieht, und eine Drahtvorschub-Anhaltestufe, bei der der Drahtvorschubmechanismus (4) das Ziehen des Schweißdrahtes (10) beendet,
**dadurch gekennzeichnet, dass** das Wickelsystem (2) Mittel zur Energiespeicherung umfasst und dass in diesem Verfahren Energie gespeichert wird, wenn der Drahtvorschubmechanismus (4) in Abwickelrichtung mit dem Abziehen des Schweißdrahtes (10) von der Drahtspule (3) beginnt, so dass, wenn der Drahtvorschubmechanismus (4) das Abziehen des Schweißdrahtes (10) beendet, die gespeicherte Energie freigegeben wird und die Drahtspule (3) in die Wickelrichtung gezogen wird, die die Richtung entgegengesetzt zur Abwickelrichtung ist.

10. Verfahren nach Anspruch 9, **dadurch gekennzeichnet, dass** Mittel zur Energiespeicherung zwischen dem Rahmen (1) der Drahtvorschubvorrichtung (L) oder einem unbeweglich zum Rahmen (1) angeordneten Teil und einem beweglich zum Rahmen (1) der Drahtvorschubvorrichtung (L) angeordneten Teil angeordnet sind, und
wobei in diesem Verfahren Energie gespeichert und freigegeben wird, was bewirkt wird, wenn das beweglich zum Rahmen (1) angeordnete Teil sich relativ zum Rahmen (1) oder zum unbeweglich dazu angeordneten Teil bewegt.

11. Verfahren nach Anspruch 10, **dadurch gekennzeichnet, dass** in diesem Verfahren in der Anlaufstufe des Drahtvorschubs aufgrund des In-Bewegung-Setzens des Schweißdrahtes (10) sich der zum Rahmen (1) der Drahtvorschubvorrichtung (L) bewegliche Teil in Abwickelrichtung bewegt und die Mittel zur Energiespeicherung Energie speichern, und
die gespeicherte Energie nach Ausführen der Drahtvorschub-Anhaltestufe freigegeben wird und das zum Rahmen (1) der Drahtvorschubvorrichtung (L) bewegliche Teil in die zur Abwickelrichtung entgegengesetzte Richtung bewegt und so den Schweißdraht (10) zwischen der Drahtspule (3) und dem Drahtvorschubmechanismus (4) spannt.

12. Verfahren nach Anspruch 10 oder 11, **dadurch gekennzeichnet, dass** in der im Verfahren verwendeten Drahtvorschubvorrichtung (L) das Wickelsystem (2) eine Welle (11) umfasst, die am Rahmen (1) der Drahtvorschubvorrichtung (L) drehbar angeordnet ist, und dass Mittel zur Energiespeicherung zwischen der Welle (11) und dem Rahmen (1) der Drahtvorschubvorrichtung (L) angeordnet sind.

13. Verfahren nach Anspruch 10 oder 11, **dadurch gekennzeichnet, dass** in der im Verfahren verwendeten Drahtvorschubvorrichtung (L) das Wickelsystem (2) eine Welle (11) umfasst und dass Mittel zur Energiespeicherung zwischen der Welle (11), die unbeweglich zum Rahmen (1) der Drahtvorschubvorrichtung (L) angeordnet ist, und einem Bremsmechanismus (14), der in Verbindung mit der Welle (11) angeordnet ist und relativ zur Welle (11) beweglich ist, angeordnet sind.

## Revendications

1. Dispositif d'avancement de fil (L) pour une machine de soudage, ledit dispositif d'avancement de fil (L) comprenant:
- un cadre (1),
- un système de bobinage (2) disposé sur le cadre (1) pour enrouler une bobine de fil (3), et
- un mécanisme d'avancement du fil (4) pour retirer le fil de soudure (10) d'une bobine de fil (3) de manière que la bobine de fil (3) tourne dans le sens de déroulement, et pour acheminer le fil de soudure (10) au travers du mécanisme d'avancement du fil (4) vers un chalumeau à souder (5),
**caractérisé en ce que** ledit système de bobinage (2) comprend des moyens de stockage d'énergie, lesdits moyens de stockage d'énergie étant adaptés à stocker de l'énergie lorsque le mécanisme d'avancement du fil (4) se met à retirer le fil de soudure (10) de la bobine de fil (3) dans le sens de déroulement de manière que, quand le mécanisme d'avancement du fil (4) cesse de retirer le fil de soudure (10), l'énergie stockée soit adaptée à être restituée et tirer la bobine de fil (3) dans le sens d'enroulement qui est le sens opposé au sens de déroulement.

2. Dispositif d'avancement de fil (L) selon la revendication 1, **caractérisé en ce que** lesdits moyens de stockage d'énergie sont disposés entre le cadre (1) du dispositif d'avancement de fil (L), ou une partie disposée de manière immobile par rapport à celui-ci, et une partie disposée de manière mobile par rapport au cadre (1) du dispositif d'avancement de fil (L) et qu'ils sont disposés de manière à stocker et restituer de l'énergie, ce qui a lieu lorsque la partie mobile par rapport au cadre (1) du dispositif d'avancement de fil (L) se déplace par rapport au cadre (1) du dispositif d'avancement de fil (L) ou par rapport à la partie qui est immobile par rapport à ce dernier.

3. Dispositif d'avancement de fil (L) selon la revendication 2, **caractérisé en ce que** ledit système de bobinage (2) comprend un arbre (11), qui est disposé de manière rotative sur le cadre (1) du dispositif d'avancement de fil (L), et que des moyens de stockage d'énergie sont disposés entre l'arbre (11) et le cadre (1) du dispositif d'avancement de fil (L).

4. Dispositif d'avancement de fil (L) selon la revendication 2, **caractérisé en ce que** ledit système de bobinage (2) comprend un arbre (11) et que des moyens de stockage d'énergie sont disposés entre l'arbre (11), qui est disposé de manière immobile par rapport au cadre (1) du dispositif d'avancement de fil (L), et un mécanisme de freinage (14), qui est disposé en liaison avec l'arbre (11) et mobile par rapport à l'arbre (11).

5. Dispositif d'avancement de fil (L) selon la revendication 4, **caractérisé en ce que** ledit mécanisme de freinage (14) est disposé de manière à pivoter, au moins partiellement, autour de l'arbre (11).

6. Dispositif d'avancement de fil (L) selon la revendication 4 ou 5, **caractérisé en ce que** ledit mécanisme de freinage (14) comprend un élément pendulaire (15) et un sabot de frein (16), ledit sabot de frein (16) étant disposé de manière à se déplacer par rapport à l'élément pendulaire (15).

7. Dispositif d'avancement de fil (L) selon l'une des revendications 1 à 6, **caractérisé en ce que** lesdits moyens de stockage d'énergie comprennent un ressort (13).

8. Dispositif d'avancement de fil (L) selon la revendication 7, **caractérisé en ce que** des moyens de réglage (17) sont disposés dans le ressort (13) pour serrer et/ou desserrer le ressort (13).

9. Méthode de mise en mouvement d'un fil de soudure (10) dans un dispositif d'avancement de fil (L),
ledit dispositif d'avancement de fil (L) comprenant un cadre (1), un système de bobinage (2) disposé sur le cadre (1) pour enrouler une bobine de fil (3), et un mécanisme d'avancement du fil (4) pour retirer le fil de soudure (10) de la bobine de fil (3) de manière que la bobine de fil (3) tourne dans le sens de déroulement, et pour acheminer le fil de soudure (10) au travers du mécanisme d'avancement du fil (4) vers un chalumeau à souder (5), et ledit système de bobinage (2) comprenant un arbre (11),
ladite méthode comprenant une étape de démarrage de l'avancement du fil, dans laquelle le mécanisme d'avancement du fil (4) se met à retirer le fil de soudure (10), et une étape d'arrêt de l'avancement du fil, dans laquelle le mécanisme d'avancement du fil (4) cesse de retirer le fil de soudure (10),
**caractérisée en ce que** ledit système de bobinage (2) comprend des moyens de stockage d'énergie et que, dans ladite méthode, de l'énergie est stockée lorsque le mécanisme d'avancement du fil (4) se met à retirer le fil de soudure (10) de la bobine de fil (3) dans le sens de déroulement de manière que, quand le mécanisme d'avancement du fil (4) cesse de retirer le fil de soudure (10), l'énergie stockée soit restituée et tire la bobine de fil (3) dans le sens d'enroulement qui est le sens opposé au sens de déroulement.

10. Méthode selon la revendication 9, **caractérisée en ce que** des moyens de stockage d'énergie sont disposés entre le cadre (1) du dispositif d'avancement de fil (L), ou une partie disposée de manière immobile par rapport au cadre (1), et une partie disposée de manière mobile par rapport au cadre (1) du dispositif d'avancement de fil (L), et
que, dans ladite méthode, de l'énergie est stockée et restituée, ce qui a lieu quand la partie disposée de manière mobile par rapport au cadre (1) se déplace par rapport au cadre (1) ou par rapport à la partie disposée de manière immobile par rapport à celui-ci.

11. Méthode selon la revendication 10, **caractérisée en ce que,** dans ladite méthode, dans l'étape de démarrage de l'avancement du fil, à cause de la mise en mouvement du fil de soudure (10), la partie mobile par rapport au cadre (1) du dispositif d'avancement de fil (L) se déplace dans le sens de déroulement et les moyens de stockage d'énergie stockent de l'énergie, et
après l'exécution de l'étape d'arrêt de l'avancement du fil, l'énergie stockée est restituée et déplace la partie mobile par rapport au cadre (1) du dispositif d'avancement de fil (L) dans le sens opposé au sens de déroulement en tendant le fil de soudure (10) entre la bobine de fil (3) et le mécanisme d'avancement du fil (4).

12. Méthode selon la revendication 10 ou 11, **caractérisée en ce que,** dans ledit dispositif d'avancement de fil (L) utilisé dans ladite méthode, ledit système de bobinage (2) comprend un arbre (11), qui est disposé de manière rotative sur le cadre (1) du dispositif d'avancement de fil (L), et que des moyens de stockage d'énergie sont disposés entre l'arbre (11) et le cadre (1) du dispositif d'avancement de fil (L).

13. Méthode selon la revendication 10 ou 11, **caractérisée en ce que,** dans ledit dispositif d'avancement de fil (L) utilisé dans ladite méthode, ledit système de bobinage (2) comprend un arbre (11) et que des moyens de stockage d'énergie sont disposés entre l'arbre (11), qui est disposé de manière immobile par rapport au cadre (1) du dispositif d'avancement de fil (L), et un mécanisme de freinage (14), qui est disposé en liaison avec l'arbre (11) et mobile par rapport à l'arbre (11).
